# EUROPEAN PATENT APPLICATION

(11) **EP 0 818 354 A2**
(43) Date of publication of application: **14.01.1998**
(21) Application number: 97500116.5
(22) Date of filing: 03.07.1997
(51) Int. Cl.: B60R 1/06

(54) **Fixing device for the exterior rearview mirrors of automobile vehicles**

(30) Priority: 09.07.1996 ES 9601529
(71) Applicant: Fico Mirrors, S.A., 08028 Barcelona (ES)
(72) Inventor: Latre Casanovas, Javier, 08190 Sant Cugat Del Valles (ES)
(74) Representative: SUGRANES - VERDONCES - FERREGÜELA

(57) **Abstract**

This device is applicable to fold-down exterior rearview mirrors of the type which comprises a bracket and a mount-bracket (1) fixed to the structure of the vehicle and a mirror-holder casing and a mount-casing (2) in which a reflective surface is mounted. The device comprises: on the mount-bracket (1), a fixing seat (5), a guide-shaft (7) and fixing teeth (14); and, on the mount-casing (2), a tubular extension (9) in which the guide-shaft (7) is fitted, a securing spring (10), a retaining washer (11) and fixing

## Description

### Technical field of the invention

The object of the invention is a fixing device for exterior rearview mirrors of automobile vehicles, which finds particular application on fold-down exterior rearview mirrors in which the position of the reflective surface can be adjusted by the user manually or automatically from inside the vehicle.

### Background of the invention

Known in the art are a very wide variety of embodiments of fold-down exterior rearview mirrors for automobile vehicles, which generally include a bracket and a mount-bracket attached to each other and fixed to the structure of the vehicle, and a mirror-holder casing and a mount-casing attached to each other in which the latter has a reflective surface mounted in it and parts which permit manual or automatic adjustment of said reflective surface from inside the vehicle, in order to adapt that surface to driving requirements. The mount-bracket and the mount-casing are mutually coupled by means of a fixing device which allows the mirror-holder casing to take up in a stable manner the position pertaining to driving the vehicle and a rearward-folding position in which, when the vehicle is parked, the mirror-holder casing lies superimposed over the vehicle bodywork. Moreover, in the event of collision or mechanical impact, the fixing device also allows the mirror-holder casing to adopt a forward-folding position.

Also known in the art are numerous embodiments of fixing devices which, in general, include a spring which works permanently under compression, acting in such a way that the facing surfaces of the mount-bracket and the mount-casing are subjected to compression, thus ensuring the position of the mount-casing and therefore of the mirror-holder casing with respect to the mount-bracket by means of respective and complementary fixing projections and cavities arranged to coincide with said driving and fold-down positions. Such fixing devices have the disadvantage that movement of the mirror-holder casing from the driving position to the rearward folding position and vice-versa calls for the application of a very high initial turning torque in order to uncouple the fixing projections from their retaining orifices, and later requires application of another turning torque of relatively low intensity to move the mirror-holder casing to the desired position, all of which involves brusque movements which are clearly not convenient for users.

### Explanation of the invention

A fixing device of new structure and functionality for exterior rearview mirrors of automobile vehicles is made known herein in order to provide a solution to the aforesaid disadvantages of known embodiments of position-fixing devices for the mirror-holder casings of fold-down exterior rearview mirrors.

The device of the invention comprises:
- on the mount-bracket fixed to the structure of automobile vehicle, a fixing seat which projects perpendicularly from the mount-bracket and has centred on it a guide-shaft of generally truncated-cone shape;
- on the mount-casing, a tubular extension designed to house with a snug fit the guide-shaft of the mount-bracket, leaving one of the ends of the tubular extension, the lower end, resting on the fixing seat; and
- a fixing spring and retaining washer mounted coaxially on the guide-shaft in such a way that the fixing spring works permanently under compression with one of its ends resting against the retaining washer and its other end against the tubular extension of the mount-casing, with the facing surfaces of the lower end of the tubular extension and of the fixing seat subjected to compression.

The fixing device of the invention is characterized in that the fixing seat of the mount-bracket has, mounted concentrically with respect to the guide-shaft and at the lower end of the tubular extension of the mount-casing, respective and complementary fixing teeth which can mesh with each other, thereby implementing rotation of the mount-casing from the driving position to a lowered position and vice-versa by sliding of the fixing teeth of the mount-casing on the fixing teeth of the mount-bracket, subjecting the fixing spring to successive elastic deformations, the fixing teeth being so designed that the gap between two adjacent teeth coincides with the angle of rotation of the mount-casing between two of said adjacent positions.

According to another characteristic of the fixing device of the invention, each fixing-teeth section comprises six equal teeth.

According to another characteristic of the fixing device of the invention, on the fixing teeth sections each tooth has a basically triangular outline whose exterior sides are symmetrical with respect to the height taken from its vertex.

According to another characteristic of the fixing device of the invention, on the fixing teeth each outer side of the teeth comprises two portions, one interior portion adjacent to the base of the tooth and another exterior portion adjacent to the vertex, respectively, which interior and exterior portions form different angles with respect to the base of the tooth.

According to another characteristic of the fixing device of the invention, on each exterior side of the fixing teeth of the mount-bracket the interior portion forms an angle with respect to the base which is greater than the angle formed by the exterior portion with respect to said base.

The functioning of the fixing device of the invention for rearview mirrors of automobile vehicles is now described. When the mirror-holder casing, and therefore the mount-casing, is in the driving position or in either the forward or rearward folding positions, the fixing teeth of the mount-bracket and of the mount-casing are meshed with each other, in which situation movement of the mirror-holder casing from the driving position to the rearward folding position and vice-versa, or movement of the mirror-holder casing from the driving position to the forward folding position and vice-versa, is implemented in such a way that application of a turning torque on the mirror-holder casing in the corresponding direction leads to sliding of the fixing teeth of the mount-casing on the fixing teeth of the mount-bracket, this sliding movement having the following phases: a first phase in which the sliding movement of the fixing teeth of the mount-casing occurs on the interior portion of one of the exterior sides of the teeth of the fixing teeth section of the mount-casing, this sliding movement causing the mount-casing to rise with respect to the mount-bracket and subject the fixing spring to greater compression; a second phase in which said sliding occurs on the exterior portion of said exterior sides, this sliding causing a further rise of the mount-casing and subjecting the fixing spring to greater compression; and a third phase in which, once the fixing teeth of the mount-casing reach the vertex of the exterior sides of the teeth of the fixing teeth part of the mount-bracket and then rest on the other exterior side of same, the elastic reaction of the fixing spring pushes the mount-casing towards the mount-bracket until both sets of teeth mesh, this closing movement being implemented by sliding of the fixing teeth of the mount-casing on the exterior and interior portions of said other exterior sides of the fixing teeth of the mount-bracket, leaving the fixing device back in the initial position described above.

The functioning of the fixing device of the invention described above shows that, for each particular case, the turning torques which the user has to apply to the mirror-holder casing solely in said first and second phases can be factory set, for from the end of said second phase, which corresponds to the middle point of travel of the mirror-holder casing between two adjacent positions, the user does not have to apply any turning torque at all since, as has been explained, the elastic reaction of the fixing spring produces automatic rotation of the mirror-holder casing until it reaches the position towards which it is moving, in which last position both sets of fixing teeth are completely meshed with each other and the position of the mirror-holder casing is maintained by the action of the fixing spring.

### Brief description of the drawings

The drawing sheets of the present specification show the fixing device of the invention for rearview mirrors of automobile vehicles. In said drawings:
Figure 1 is a side view which shows separately a mount-bracket and a mount-casing of a fold-down exterior rearview mirror with the fixing device of the invention;
Figure 2 is a plan view of the fixing teeth of the mount-bracket;
Figure 3 is a side view showing the profile of a tooth of the mount-bracket fixing teeth;
Figure 4 is a side view of the mount-bracket and the mount-casing of Figure 1 coupled together and in the driving position;
Figure 5 is a side view of the mount-bracket and mount-casing of Figure 1 coupled together and in an intermediate position between the driving position and rearward-folded or parking position.

### Detailed description of the example of embodiment

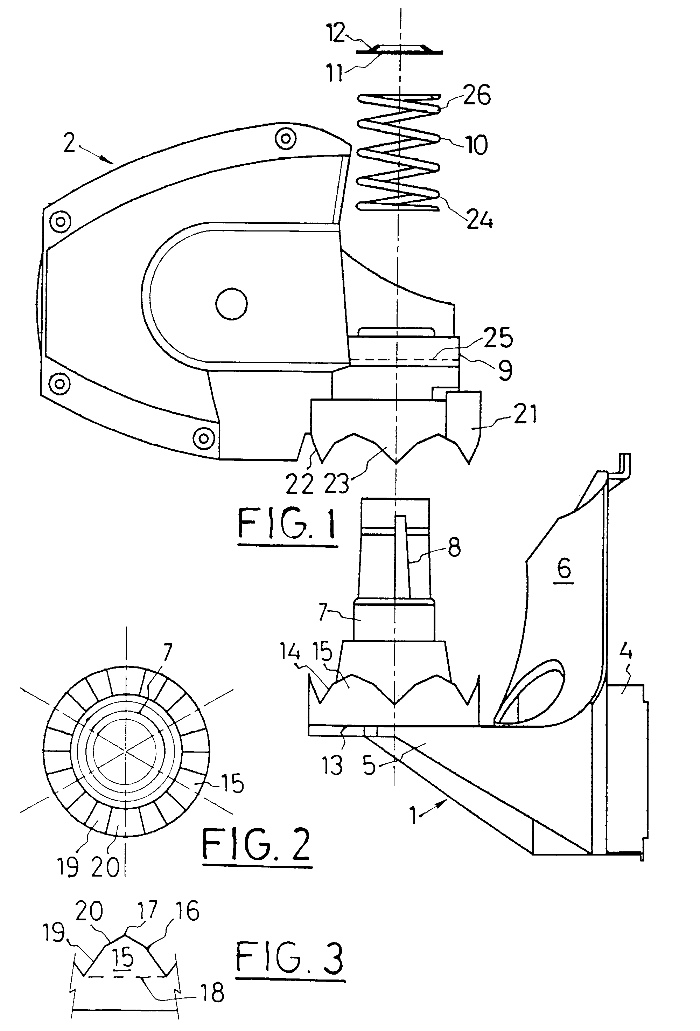

The fixing device of the invention for exterior rearview mirrors of automobile vehicles described as an example of embodiment is applicable to rearview mirrors such as that shown in simplified form in Figures 1, 4 and 5, which mirrors have a mount-bracket 1 and a mount-casing 2, both preferably made by aluminium injection casting, and a fixing device 3. For the purpose of achieving suitable clarity of outline, the drawing-sheet figures of a bracket and a mirror-holder casing for the mount-bracket 1 and the mount-casing, respectively, have not been shown. Those parts, that is, the bracket and the mount-bracket 1 and the mirror-holder casing and the mount-casing 2, can adopt any configuration suited to each specific case of application without this in any way affecting the essential nature of the invention, the mount-bracket 1 and the mount-casing 2 shown in Figures 1, 4 and 5 being provided simply by way of non-restrictive example of the fixing device of the invention. It should be noted here that the mount-bracket 1 and the mount-casing 2 shown in said Figures 1, 4 and 5 correspond to the driver-side rearview mirror; it can be understood that the description which follows is totally applicable also to the passenger-side exterior rearview mirror simply by applying the pertinent conditions of symmetry.

Figures 1, 4 and 5 show how the mount-bracket 1 includes a projecting piece 4 for anchoring it to the vehicle structure, not shown, and a fixing seat 5 mounted perpendicularly to the body 6 of the mount-bracket 1 which has a guide-shaft 7 of generally truncated-cone shape provided with longitudinal grooves 8 as shown in Figure 1. The mount-casing 2 has a tubular extension 9 designed to contain with a snug fit the guide-shaft 7 of the mount-bracket 1, in such a way that the mount-casing 2 can be turned in both directions. The fixing device 3 has a fixing spring 10 and a retaining washer 11 provided with interior projecting parts 12 designed to fit snugly in the longitudinal grooves 8 of the guide-shaft 7.

The arrangement described is known in the art and widely used in numerous embodiments of exterior rearview mirrors of automobile vehicles.

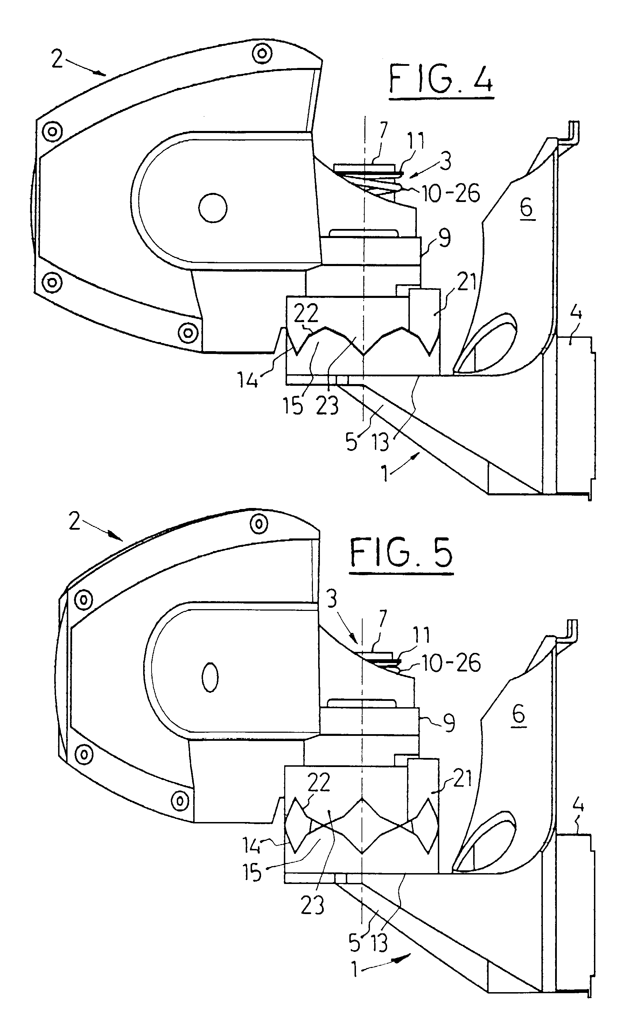

Figures 1, 4 and 5 show how the fixing seat 5 of the mount-bracket 1 has at one of its sides, the upper one marked with reference number 13, a toothed fixing section 14 mounted concentrically with respect to the guide-shaft 7 as shown in Figure 2, which toothed fixing section 14, which totally surrounds the guide-shaft 7, comprises a total of six equal teeth 15. Figure 3 is an enlarged view showing how each of the teeth 15 has a basically triangular profile or outline in which the two outer sides 16 are symmetrical with respect to the height of the tooth 15, the height being taken to mean the perpendicular drawn from the vertex 17 of both exterior sides 16 to the base 18 indicated by broken lines; on each exterior side 16 two clearly defined portions can be distinguished, a first portion or interior portion 19 adjacent to the base 18, and a second portion or exterior portion 20 adjacent to the vertex 17. With respect to the base 18, the interior portion 19 forms a larger angle than the exterior portion 20; it can nevertheless be understood that this arrangement of angles can be precisely the reverse without this affecting the essential nature of the invention, that is, with respect to the base 18 the exterior portion 20 forms an angle larger than that of the interior portion 19. In this example of embodiment of the fixing teeth 14, two adjacent teeth 15 span an angle of 60°, an angle which in this example of application of the fixing device of the invention corresponds to the angle which the mirror-holder casing, and consequently the mount-casing 2, has to describe during its rotation from the driving position to a folded position and vice-versa.

Figures 1, 4 and 5 show how the tubular extension 9 of the mount-casing 2 has at one of its ends, the lower end 21, a fixing teeth section 22 composed of six teeth 23 whose outline, which has not been shown in enlarged form, corresponds in complementary fashion with that of the teeth 15 of the fixing teeth section 14 of the mount-bracket 1, in such a way that, as shown in Figure 4, both sets of fixing teeth 14, 22 can mesh with each other.

The functioning of the fixing device of the invention for automobile vehicle exterior rearview mirrors which is described as an example of embodiment is set out in detail below.

Figure 4 shows the exterior rearview mirror arrangement which is described as an example of application with its mount-bracket 1 and mount-casing 2 coupled together by means of the fixing device 3, with the mount-casing 2 in the driving position. Under these conditions the fixing spring 10 is mounted coaxially with respect to the guide-shaft 7 and works permanently under compression, in such a way that one of its ends, the interior end 24, rests against an internal seat 25 of the tubular extension 9 shown by broken lines in Figure 1, while its other end, the exterior end 26, rests against the retaining washer 11 coupled to the guide-shaft 7 by means of its internal projecting pieces 12 housed in the longitudinal grooves 8, and the fixing teeth 14, 22 of the mount-bracket 1 and the mount-casing 2 respectively are meshed, so that under normal automobile vehicle running conditions the driving position of the mirror-holder casing is maintained by the action of the fixing spring 10.

When the user needs to move the mirror-holder casing to the parking position, that is, to the rearward-folded position, s/he has to apply to it a turning torque in the corresponding direction to make the fixing teeth 22 of the mount-casing 2 slide on the fixing teeth 14 of the mount-bracket 1, in such a way that during a first phase of said sliding movement the fixing teeth 22 of the mount-casing 2 slide on the interior portion 19 of the corresponding exterior sides 16 of the teeth 15 of the mount-bracket 1 fixing teeth 14, this sliding movement being caused by separation of the mount-casing 2 from the mount-bracket 1 with the fixing spring 10 being subjected to greater compression by reduction of its length, while in a second phase the fixing teeth 22 slide on the exterior portion 20 of said exterior sides 16, increasing the separation of the mount-casing 2 from the mount-bracket 1 and subjecting the fixing spring 10 to greater compression by reduction of its length; and in a third phase, and once the fixing teeth 22 of the mount-casing 2 reach the vertices 17 as shown in Figure 5 and then the other exterior side 16, the elastic reaction of the fixing spring 10 automatically pushes the mirror-holder casing by sliding of the fixing teeth 22 of the mount-casing 2 on the exterior 20 and interior 19 portions of said exterior sides 16, this sliding continuing until the mirror-holder casing reaches the rearward-folded position in which the two sets of fixing teeth 14, 22 are meshed with each other as described above. It can be understood that the movement of the mirror-holder casing from the rearward-folded position to the driving position, and its movement from the driving position to the forward-folded position and vice-versa, do not differ functionally from the description given for movement from the driving position to the rearward-folded position.

The functioning of the fixing device of the invention permits the turning torque which a user has to apply on the mirror-holder casing to make it move from the driving position to a folded position and vice-versa to have two different values which correspond to said first and second phases of rotation of the mirror-holder casing, these turning torques being applied only during the first half of the travel of the mirror-holder casing, since the second half of said travel is implemented automatically. Said turning torques can thus be factory pre-set to adapt them to each specific case of application. In the example of embodiment described, the turning torque for the first phase is greater than that of the second phase.

## Claims

1. Fixing device for exterior rearview mirrors of automobile vehicles, comprising,
- on the mount-bracket (1) fixed to the structure of automobile vehicle, a fixing seat (5) which projects perpendicularly from the mount-bracket (1) and has centred on it a guide-shaft (7) of generally truncated-cone shape;
- on the mount-casing (2), a tubular extension (9) designed to house with a snug fit the guide-shaft (7) of the mount-bracket (1), leaving one of the ends of the tubular extension, the lower end (21), resting on the fixing seat (5) ;
- a fixing spring (10) and a retaining washer (11) mounted coaxially on the guide-shaft (7) in such a way that the fixing spring (10) works permanently under compression with one of its ends (26) resting against the retaining washer (11) and its other end (24) against the tubular extension (9) of the mount-casing (2), with the facing surfaces of the lower end (21) of the tubular extension (9) and of the fixing seat (5), which is characterized in that the fixing seat (5) of the mount-bracket (1) has, mounted concentrically with respect to the guide-shaft (7) and at the lower end (21) of the tubular extension (7) of the mount-casing (2), respective and complementary fixing teeth (14, 22) which can mesh with each other, thereby implementing rotation of the mount-casing (2) from the driving position to a lowered position and vice-versa by sliding of the fixing teeth (22) of the mount-casing (2) on the fixing teeth (14) of the mount-bracket (1), subjecting the fixing spring (10) to successive elastic deformations, the fixing teeth (14, 22) being so designed that the gap between two adjacent teeth coincides with the angle of rotation of the mount-casing (2) between two of said adjacent positions.

2. Fixing device as claimed in Claim 1, characterized in that each fixing-teeth section (14, 22) comprises six equal teeth (15, 23).

3. Fixing device as claimed in Claims 1 and 2, characterized in that on the fixing teeth sections (14, 22) each tooth (15, 23) has a basically triangular outline whose exterior sides (16) are symmetrical with respect to the height taken from its vertex (17).

4. Fixing device as claimed in Claims 1 to 3, characterized in that on the fixing teeth (14, 22) each outer side (16) of the teeth (15, 23) comprises two portions, one interior portion (19) adjacent to the base (18) of the tooth (15, 23) and another exterior portion (20) adjacent to the vertex (17), respectively, which interior (19) and exterior (20) portions form different angles with respect to the base (18) of the tooth (15, 23).

5. Fixing device as claimed in Claims 1 to 4, characterized in that on each exterior side (16) of the fixing teeth (14) of the mount-bracket (1) the interior portion (19) forms an angle with respect to the base (18) which is greater than the angle formed by the exterior portion (20) with respect to said base (18).
